(19) Europäisches Patentamt
European Patent Office
Office européen des brevets

(11) EP 4 411 604 A1

(12) **EUROPEAN PATENT APPLICATION**

(43) Date of publication:
**07.08.2024 Bulletin 2024/32**

(21) Application number: **23315018.4**

(22) Date of filing: **01.02.2023**

(51) International Patent Classification (IPC):
**G06N 20/00** (2019.01)    **G06F 16/215** (2019.01)

(52) Cooperative Patent Classification (CPC):
**G06F 16/215; G06N 20/20;** G06N 5/01; G06N 7/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Amadeus S.A.S.**
**06410 Biot (FR)**

(72) Inventors:
• **IVANOV, Anton**
**10245 Berlin (DE)**
• **STEITZ, Wolfgang**
**63225 Langen (DE)**
• **LAHTINEN, Ville**
**12049 Berlin (DE)**

(74) Representative: **Samson & Partner Patentanwälte mbB**
**Widenmayerstraße 6**
**80538 München (DE)**

(54) **FILTERING A DATASET**

(57)    A computerized method of filtering a dataset for processing is presented. The method starts with receiving a dataset with a plurality of data records. Afterwards, an estimation module determines selection estimation values for the data records, based on which subsequently pass-through probabilities are determined by a pass-through function. The method further comprises generating a subset of data records by discarding at least a portion of the dataset based on the pass-through probabilities. The subset of data records is then processed and one or more data records are selected. Finally, weights and labels are assigned to the data records of the subset of data records for updating the estimation module and the pass-through function.

Fig. 1

## Description

### FIELD

The present disclosure generally relates to data processing and, in particular, to filtering a dataset for processing using machine learning routines.

### BACKGROUND

Data analytics has become essential in many industries and organizations. Large amounts of data are collected and analyzed to obtain useful information about domain-specific problems. Processing such large amounts of data can be computationally expensive (e.g., processing power, memory, etc.) and time-intensive. Furthermore, the data may have to be processed in real-time or near real-time, thereby requiring the data to be analyzed in a timely manner; for example, a production pipeline needs to decide, based on data collected, which products to inspect in detail for defects. In another domain, online advertising, advertisers bid on display ads in real-time via online auctions, deciding on what to bid by evaluating a large number of requests. In both instances, the data volume is significant and needs to be processed promptly.

The aforementioned problem of consumption of substantial amount of time and/or resources in data processing can be addressed by scaling resources. However, this is expensive and often not possible. The methods described herein propose a solution to reduce time and required resources in data processing, thereby providing an alternative to scaling resources.

### SUMMARY

In this context, methods, systems and computer program products are presented as defined by the independent claims.

More specifically, a computerized method of filtering a dataset for processing, wherein the dataset comprises a plurality of data records, is presented. The method comprises determining, by an estimation module, selection estimation values for the data records, determining, by a pass-through function, pass-through probabilities for the data records based on the selection estimation values, generating a subset of data records by discarding at least a portion of the dataset based on the pass-through probabilities, processing, by a selection module, the subset of data records, wherein the selection module selects one or more data records of the subset of data records, assigning weights and labels to the data records of the subset of data records, wherein the weights reflect a data distribution of the data records with respect to the subset of data records, and wherein the labels represent a selection of the data records by the selection module, and updating the estimation module and the pass-through function based on the subset of data records including the weights and labels.

Yet another aspect concerns a system of filtering a dataset configured to execute the method as described herein.

Finally, a computer program is presented that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the disclosure not being limited to any particular embodiments.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:

> Fig. 1 depicts a high-level system architecture implementing the functionalities described herein.
>
> Fig. 2 is a flowchart of filtering a dataset for processing.
>
> Fig. 3 is a flowchart of filtering a dataset for processing according to an embodiment.
>
> Fig. 4 is a diagrammatic representation of a pass-through function.
>
> Fig. 5 is a graphical representation of an example of application of filtering.
>
> Fig. 6 is a flowchart depicting the flow of data through the various modules implementing the filtering a dataset for processing.
>
> Fig. 7 is a flowchart indicating training, operation and retraining of machine learning routines.
>
> Fig. 8 is diagrammatic representation of a computing system implementing the functionalities described herein.

### DETAILED DESCRIPTION

The present disclosure relates to methods and systems of filtering a dataset for processing. Data filtering aims to reduce the amount of data that need to be processed and analyzed in order to increase efficiency in terms of computational resources and speed while maintaining the relevance and accuracy of the filtered data with respect to the provided original data.

Due to large-scale data acquisition, the volume of data to be processed is very large. Such big datasets often contain redundant, inconsistent, or irrelevant data for a particular domain-specific objective. In data filtering, data that is identified as redundant, inconsistent, or irrelevant is discarded. Therefore, filtering datasets results in smaller datasets that need to be processed using computation-intensive methods, leading to a more efficient system without compromising accuracy.

A second key challenge in data analysis is velocity of the data arriving at the data processing systems, i.e., the frequency of data streams. In order to avoid bottlenecks and achieve objectives timely, datasets need to be processed promptly. In this scenario, the reduction in the size of datasets due to data filtering results in faster processing, thereby addressing the challenge of high frequency of data streams.

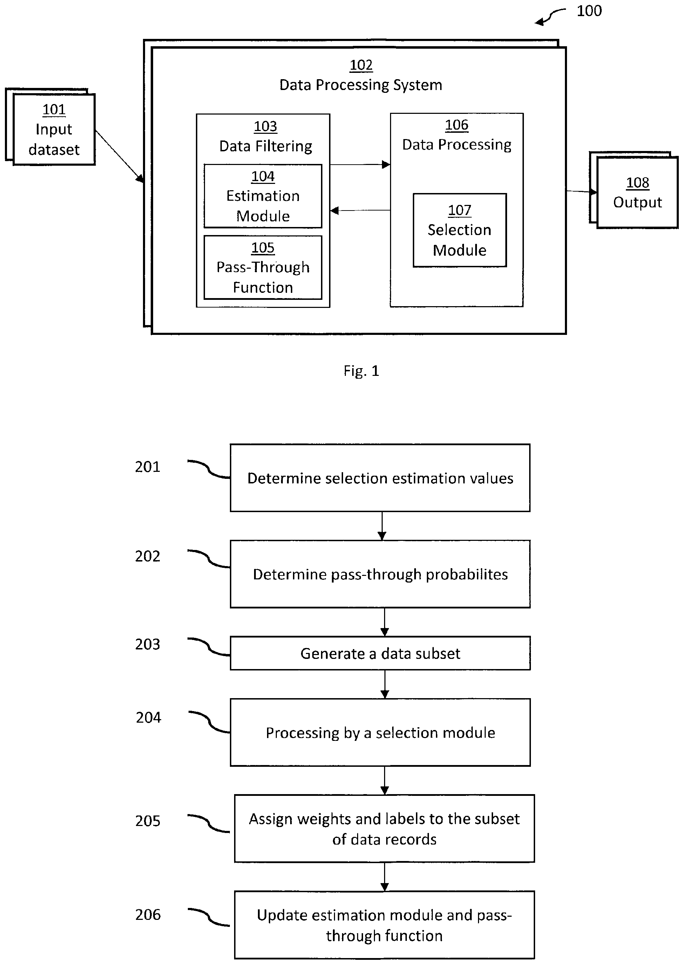

Fig. 1 depicts a high-level system architecture implementing the functionalities, i.e., the filtering of data described herein. The system 100 comprises a data processing system 102 that receives one or more input datasets 101 and produces one or more output values 108. The data processing system comprises a data filtering module 103 and data processing module 106.

In some embodiments, multiple data processing systems 102 may be included. In some further embodiments, multiple input datasets 101 or multiple output values 108 may be present. Moreover, the modules presented here may be combined; for example, the data filtering module 103 and data processing module 106 may be present as a combined single module. Alternatively, the data filtering module 103 and data processing module 106 may be provided on different servers that are located apart from each other. In such an embodiment, the data processing system 102 may be a distributed system, in which the components or modules communicated via a network.

Generally, the data processing system 102 may be a single computing system hosted by a server or may comprise a plurality of distributed computing systems hosted by a plurality of servers. The data processing system 102 may include a processor, a memory, a mass storage memory device, an input/output (I/O) interface, and a Human Machine Interface (HMI). The data processing system 102 may also be operatively coupled to one or more external resources via a network or I/O interface. External resources may include, but are not limited to, servers, databases, mass storage devices, peripheral devices, cloud-based network services, or any other suitable computer resource that may be used by the data processing system 102. The data processing system 102 may comprise a plurality of functional modules that fulfil different tasks for enabling the methods as described herein, such as the data filtering module 103 and data processing module 106.

Data acquisition, storage, and processing in system 100, may be achieved on-site, on remote systems, or by means of cloud-computing services, which enable on-demand access to a shared pool of computing resources that can be rapidly provisioned and released via the Internet, e.g., Platform as a service (PaaS), Software as a Service (SaaS).

The system 100, and all encompassed and associated modules and devices, may exchange information via one or more wired and/or wireless communication networks. A communication network may include a cellular network, local area network (LAN), a wide area network (WAN), a metropolitan area network (MAN), a telephone network (e.g., the Public Switched Telephone Network (PSTN)), a proprietary network, a wireless application protocol network (WAP), a Bluetooth network, a wireless LAN network, an adhoc network, a fiber-optic based network, a cloud computing network, an internet protocol (IP) network such as internet, an intranet, or an extranet, or similar network as is known in the art.

An operator or a user may access the system 100, directly or via a remote device to view, modify and manage the information, as described in the embodiments herein. The remote device may include a tablet, a smartphone, a personal computer, or any similar device as is known in the art. A user interface, textual or graphical, may be used to display, operate, and interact with the system 100. For example, an operator may view the input data 101, change parameters of the data filtering system 103, and view the output 108.

As shown in Fig. 1, the input dataset 101 is received and forwarded to the data processing system 102 for processing. The dataset 101, may be provided by various systems and/or databases. The dataset may be gathered or generated by one or a plurality of systems, input by users of one or a plurality of systems, or the like. The datasets may be received in various configurations. For example, in some embodiments, the datasets maybe gathered or generated, stored, and provided as a batch on reaching a certain threshold. In another embodiment, the dataset 101 may be received, as the data is gathered or generated, in real-time or near real-time. Additionally, the datasets may be received periodically, according to a schedule, on-demand, and the like.

A dataset comprises a plurality of data records. Data records comprise fields and values. Data records may comprise structured data, which is data with a predefined structure; for example, sensor data from various sensors gathered for each product in a manufacturing plant is placed in a pre-defined format in a file. Structured data may be language-neutral, platform-neutral, and extensible. Data records with defined fields are examples of structured data. Data records may also be of a semi-structured form. Semi-structured data refers to what would typically be considered unstructured data but with a pre-defined metadata structure.

As described above, the data processing system 102 comprises the data filtering module 103 and the data processing module 106. The input dataset 101 is processed by the data filtering module 103 before being passed on to the data processing module 106 that processes the data to generate an output 108. The data processing module 106 also provides data to the data filtering module 103, thereby providing an intelligent feedback mechanism to improve future filtering.

The data filtering module 103 comprises an estimation module 104 and a pass-through function 105. The input dataset 101 is reduced to a subset of data once processed by the data filtering module 103. The estimation module 104 and pass-through function 105 comprise trainable entities. In some embodiments, the data filtering module 103 provides training and re-training processes for the trainable components, which are described herein

The data processing module 106 processes the data and generates an output 108. The data processing module 106 may provide predictions or decisions based on the input data 101. For example, every search transaction generates metrics, technical (e.g., response time, message size, error message) and functional (e.g., number of fares loaded, activation of heuristics). In an alerting and monitoring system, the data processing module 106 may decide when alerts should be triggered based on the metrics which form the input dataset 101. Alerts may be triggered on the metrics passing a certain threshold in a particular context. The cost of this alerting and monitoring process can be reduced by filtering the input dataset by methods described herein.

An overview of the basic method according to the disclosure is presented in the flowchart of Fig. 2. The flowcharts described herein do not imply a fixed order of the processes described herein or a fixed number of iterations. As known by the skilled person, the order of processes can be changed and/or only those processes that are deemed necessary may be implemented.

Filtering and processing a dataset comprising a plurality of data records starts with determining selection estimation values for the data records as depicted in box 201. The selection estimation values are determined by an estimation module, such as the estimation module 104 of Fig. 1. The estimation module 104 may be a machine learning routine trained to determine selection estimation values for the data records. The estimation module 104 may also be any logistic regression model. In some embodiments, the estimation module 104 may be a gradient-boosted decision tree.

Gradient boosting is a machine learning algorithm, used for both classification and regression problems. It is a popular model because of its accuracy and efficiency. In gradient boosting, an ensemble of weak models is created that together form a strong model. These weak learners are usually shallow decision trees. The weak learners are built sequentially, whereby each new weak learner tries to improve on the error from the previous weak learner model. This iterative process is repeated until a desired level of complexity is reached. Gradient boosted regression trees capture non-linear relationships well, have a relatively quick training time, and it is highly scalable.

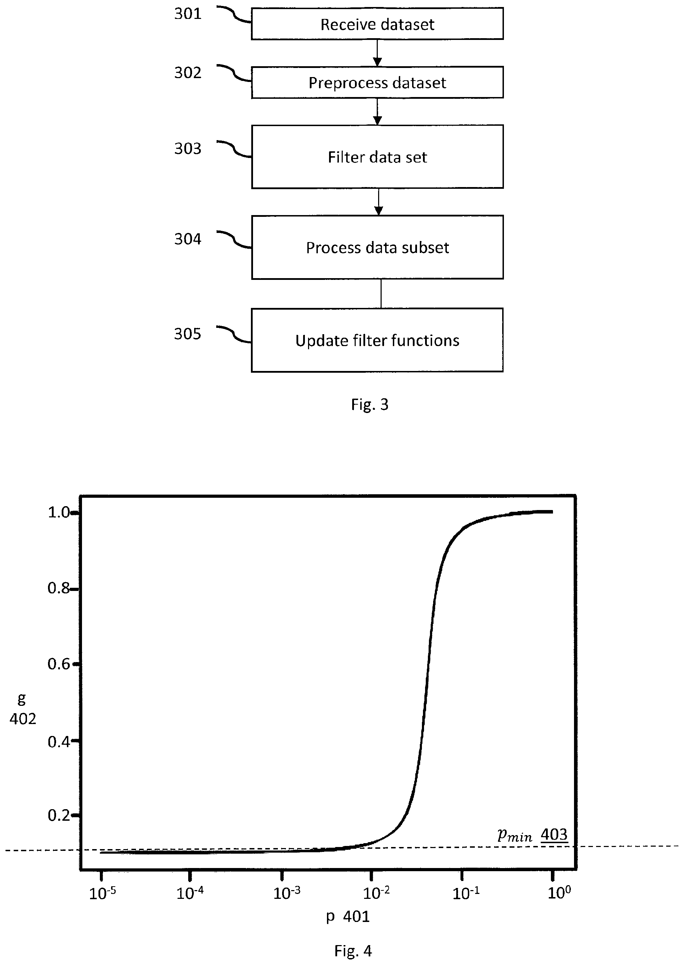

Afterwards, a pass-through function, such as the pass-through function 105 of Fig. 1, is used to determine pass-through probabilities for the data records based on the selection estimation values as depicted in box 202. For example, selection utilization values assigned to the data records may be mapped to pass-through probabilities using a trained pass-through function. The pass-through function 105 may be constructed such that it is a monotonously increasing function. An example graphical representation of such a monotonously increasing pass-through function is presented in Fig. 4. The pass-through function 105 may assign a higher pass-through probability to data records with high selection utilization values, implying high utilization data is almost always present in the filtered subset. Data records with low selection utilization values may be mapped to lower but non-zero pass-through probabilities.

When the selection utilization values have been mapped to pass-through probabilities by the pass-through function 105, a subset of data records is generated by discarding at least a portion of the dataset based on the pass-through probabilities as depicted in box 203. This results in a subset with a large proportion of data-records in this subset being assigned high selection utilization values. This subset then forms the input to the data processing module, such as the data processing module 106 of Fig. 1. Reducing the dataset to a smaller subset of data records reduces the time and computational resources required to process a dataset.

The selection module, such as the selection module 107 of Fig. 1, then processes the subset of data as shown in box 204. The selection module selects one or more data records based on some process, computation, or algorithm. The selected one or more data records form the output 108 of the overall data filtering and processing. For example, in order to train machine learning models for optimization, thousands of search requests (input and output messages) are sampled regularly. They are based on timestamps with the assumption that it will be representative of the whole search traffic. These requests are then processed to select the targeted type of search requests. The selected requests form the output of the system. With methods described herein, the requests can be dynamically sampled using the filtering module 103 of Fig. 1, instead of relying on the static timestamp approach before being processed, thereby reducing the number of requests captured as well as making the sampling process dynamic.

Periodically, based on the preceding iterations, weights and labels are assigned to the subset of data records as depicted in box 205. The weights reflect a data distribution of the data records with respect to the subset of data records, and the labels represent a selection of the data records by the selection module 107. The labels depend on the selection by the selection module 107 of Fig. 1. In some embodiments, the labels may be binary. For example, a value of 1 may be assigned to a data record selected by the selection module 107. Conversely, a value of 0 may be assigned to a data record that was not selected. The weights depend on the pass-through probabilities. A data record with a low pass-through probability may be assigned a higher weight. For example, a weight of 10 would be assigned to a data record with a pass-through probability of 0.1. Similarly, a weight of 5 will be assigned to a data record with a pass-through probability of 0.2.

The modified subset of the data records including the weights and labels is used to update the estimation module 104 and pass-through function 105. The estimation module 104 uses the subset of data records as a training set for its machine learning routine. Moreover, the weights and the filtered data are used to re-train the pass-through function 105. The herein described feedback loop providing the subset of data with weights and labels to the filtering module 103, i.e., to the estimation module 104 and pass-through function 105, allows the filtering module 103 to be dynamic and capable of self-learning

Fig. 3 depicts another flowchart of the method according to an embodiment. At first, the dataset, i.e., an input is received as depicted in box 301. The dataset received comprises a plurality of data records. The data records may comprise fields and values. For example, in real-time bidding for advertisements, bid requests are received from several supply-side platforms (SSPs). A plurality of bid requests forms a dataset and a data record comprises information for a particular bid request. A data record, in this example, may contain several fields and values, such as user identifier, user country, device browser, device operating size, device screen size, webpage URL, auction type, auction minimum bid, and other information pertinent to the request. All or some fields in the data record may be essential for filtering and processing; for instance, in the example above, device type, country code, browser may be some of the fields utilized.

Next, as shown in box 302, the dataset is pre-processed. In various embodiments, pre-processing is performed before filtering the dataset and prior to training the machine learning routines and trainable functions present in the data filtering module 103. In the pre-processing, the data may be enriched by merging data records with additional information from a database or adding further information determined based on the data records. The amount of information in data records may also be reduced by removing information not essential to the filtering or the processing of data.

The input that is received in 301 and pre-processed in 302 is filtered in 303, e.g., by the data filtering module 103 of Fig. 1. A dataset may be filtered by using machine learning routines and trainable functions. The machine learning routines and trainable functions may be trained in advance with training data set mirroring the data structure of the input data received. Filtering reduces the size of the initial input data set, with at least a portion of the dataset discarded. For example, considering the real-time bidding example from the filtering process, the initial dataset of potential bid requests may be reduced to a subset containing data records that lead to bids with the highest likelihood of success or utilization.

Next, the filtered data is processed in 304. The processing of the filtered data leads to a utilizable output 108. The processing of the filtered data may consist of any process resulting in the desired output. For example, in the real-time bidding scenario described earlier, a filtered subset of the original dataset may be presented to the selection module 107 for processing. The selection module 107, which may be a time-intensive algorithm, may select a portion of the subset for bidding.

After processing the subset of the data, filter functions, e.g., implemented in the filtering module 103, are updated. The output 108 of the selection module 107, in combination with the filtered subset, is used to update the models of the filtering module 103. For example, in the real-time-bidding scenario described earlier, the filtered subset used as an input for the selection module 107 combined with weights and labels is used to retrain the machine learning routines and the trainable function comprised by the filtering module 103. By filtering the bid requests, computational resources and associated costs may be reduced, the average processing time of an incoming bid request may be reduced, and additionally, the saved resources may be allocated to more sophisticated valuation logic leading to an improvement of the relevant key performance indicators (KPIs).

Now turning to Fig 4, in which a graph is depicted that represents a pass-through function. The x-axis "p", 401, represents the selection utilization probabilities, and the y-axis "g", 402, the pass-through probabilities. It may be observed that selection utilization probability $p = 0$ or $p_{min}$, 403, is mapped to a non-zero value. In the example of Fig. 4, this non-zero value of the pass-through probabilities is 0.1, or - in other words - $p_{min}$ is set to 10%. The percentage of potentially selected data records passed through is a constant and may be set to 90% in some embodiments.

In some embodiments, the pass-through function may be defined as $g(p) = p_{min} + (1 - p_{min}) \cdot g^*(p)$, where $g^*(p) = \frac{g^{**}(p) - g^{**}(0)}{g^{**}(1) - g^{**}(0)}$. The function $g^*(p)$ is constructed such that $g^*(0) = 0$ and $g^*(1) = 1$. $g(p)$ is constructed such that $g(0) = p_{min}$ and $g(1) = 1$. The function $g^{**}(p) = \tan^{-1}(\beta \cdot (p - \alpha))$ may be any monotonically increasing function.

The pass-through probabilities may be categorized into two classes, low pass-through probabilities, and high pass-through probabilities. Two parameters of the function may be trainable. These two parameters may control the position of the sudden transition from low to high pass-through probabilities and the slope. In this example, the first trainable parameter, $\beta$, controls the slope

of the transition from low to high pass-through probabilities; the higher the $\beta$, the steeper the transition. The second trainable parameter, $\alpha$, is responsible for the location of the transition from low to high pass-through probabilities; an increase in $\alpha$ shifts the transition towards the right. In other embodiments, more parameters, such as three, four, or even more, may be trainable and adapted to the structure of the dataset.

In further embodiments, the two trainable parameters of the pass-through function, $\beta$ and the $\alpha$, may be set so that the fraction of potential selected data records passed through the pass-through function ($n_+$)

$$n_+ = \frac{\sum_i y_i}{\sum_i \frac{1}{g(p_i)} y_i}$$

is constant, where , with $y_i$ representing the outcome of the selection module. If the data record was selected $y_i = 1$, otherwise $y_i = 0$. All sums are over the elements in the filtered dataset. To find the new parameters, $\beta$ and $\alpha'$, ($n_+'$) may be computed, where

$$n_+' = \frac{\sum_i \frac{g'(p'_i)}{g(p_i)} y_i}{\sum_i \frac{1}{g(p_i)} y_i}$$

. In this case, for each data record i, $p_i$ is the selection utilization value from the initially trained estimation module, $p'_i$ is the selection utilization value from the retrained estimation module, $g(p_i)$ is the pass-through probability assigned by the original pass-through function, $g'(p'_i)$ is the pass-through probability obtained using the new parameters $\beta'$ and the $\alpha'$, and $y_i$ is the outcome of the selection module.

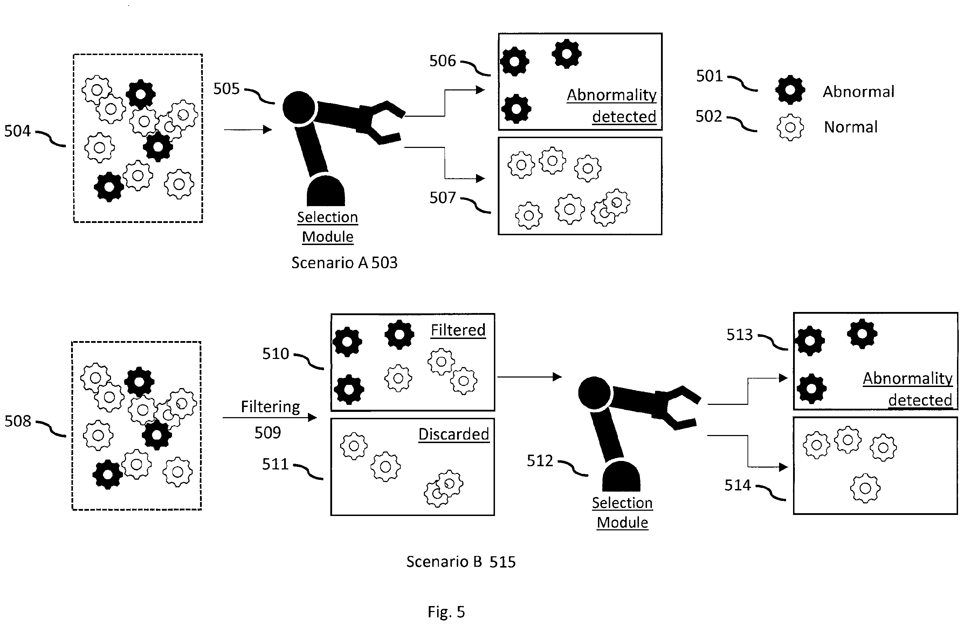

Fig 5. illustrates a use-case in a manufacturing plant. A manufacturing plant that manufactures a particular product needs to assess for product abnormalities. Assessing each product is time intensive and requires considerable resources. In scenario A, each product is assessed individually. The white gears as represented by 502 in the illustration represent "good" products without issues, whereas the black gears, 501, represent products with abnormalities. In the example, all ten manufactured entities, as in the box 504 in scenario A and box 508 in scenario B, need to be inspected individually, resulting in three products with abnormalities being detected, as seen in box 506 and box 513 in scenario A and scenario B respectively.

A data record in the example embodiment contains information about a product manufactured. Examples of information in the data record could be environmental, such as humidity, temperature, time of manufacture, or product-specific, such as height, width, and other sensor measurements. All products manufactured in one particular batch are grouped to form a dataset. In the illustrated scenario, the dataset contains ten data records, one for each product manufactured in a particular batch.

The data records may be pre-processed. For each of the ten data records, a selection estimation value is determined by an estimation module, such as the estimation module 104 of Fig. 1. For example, product 1 is assigned the value 1, and product 2 is assigned a selection estimation value of 0.01, indicating that product 1 is very likely to have abnormalities and to be selected.

Thereafter, the selection estimation values are mapped to pass-through probabilities using a pass-through function, such as the pass-through function 105 of Fig. 1. In the example often data records, each selection estimation value for each product is mapped to a pass-through probability, such that product 1, with a selection estimation value of 1, has been assigned a pass-through probability 1, and product 2, with a selection estimation of 0.01, has been assigned a pass-through probability of 0.1.

Next, a subset of the data records is generated based on the values of pass-through probabilities. In the current example, all products with the pass-through probability 1 will be included in the subset; none will be discarded. However, only 10% of the products with a pass-through probability of 0.1 will be included in the subset with 90% of the products with such a pass-through probability being discarded. This is depicted in scenario B, 515. in Fig. 5, where after the filtering 509, two sets of products are available, discarded, as in box 511, and filtered, as in box 510. The discarded set contains products with very low selection utilization probability that are not expected to have any abnormalities. The filtered set contains products with abnormalities and products with no abnormalities, albeit a much smaller number than the original dataset.

The filtered dataset is then processed, wherein the resource-intensive algorithm selects the products with abnormalities. As depicted in Fig. 5, the input to the selection module 512 is significantly smaller in scenario B than in scenario A. This reduction in the input to the selection module saves significant time and computation resources.

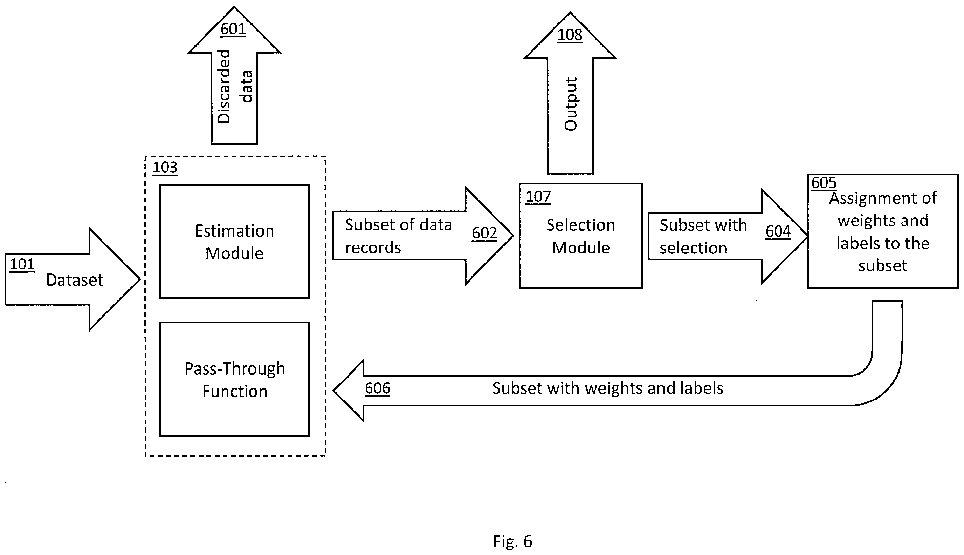

An example data flow through the various modules implementing the methods described herein is visualized in Fig. 6. Input data 101 is received by and filtered in the filtering module 103. The filtering module 103 may comprise the estimation module 104 and pass-through function 105 as depicted in Fig. 1. A portion of the input data 101 is discarded (as depicted by the arrow 601) by the filtering module 103. The remaining data forms the subset of data records 602, which serves as input for the selection module 107. The selection module 108 selects one or more data records that are the data output 108. Following the selection, subset and selection information 604 is augmented with new labels and weights as shown in box 605, creating a new subset 606 for training in the filtering module.

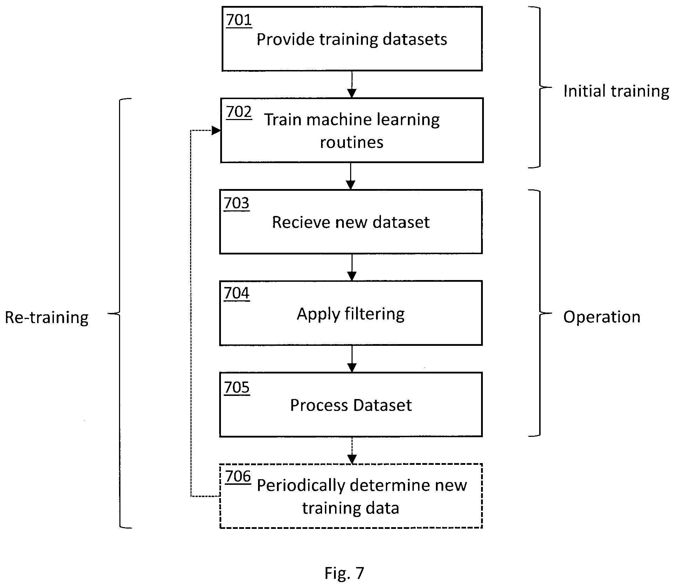

Fig. 7 presents a flowchart depicting the methods described herein with respect to machine learning operations, training, operations, and re-training. The estimation module 104 is trained using a training set 701. The training set is a dataset containing data records and labels that are the ground truth. The ground truth or the true labels for the data records in a training set is known by processing the entire dataset in the selection module 107. A training set that includes a diversity of data records provides a good model. This, however, is not always possible. Hence, re-training is an essential process for a good machine-learning model. The estimation module and the pass-through function are trained 702 before operation. Training is essential before operation and generally takes place once in the beginning.

Once the data filtering module 103 has been trained, it can be used in operation. The operation consists of receiving new dataset 703, applying filtering 704, and processing dataset 705. Periodically, the machine learning modules 103 are improved by using new training datasets. As evident in Fig. 7, the re-training dataset is compiled using filtered and processed data from the operation. This training data-set is then used to re-train the filtering module, thereby making the methods described herein self-learning.

Generally speaking, the methods presented herein reduce the time and computational resources needed to process data for a prediction or a decision. It therewith reduces the time to output and provides accurate, timely processing of data. Due to machine learning routines, 104 and 106, a tailored solution is possible for various use cases. The filtering process can take place without human intervention, allowing for automation. The intelligent loop-back mechanism allows for re-training the filtering module 103, keeping the machine learning models current and the methods described herein adaptable to changing data.

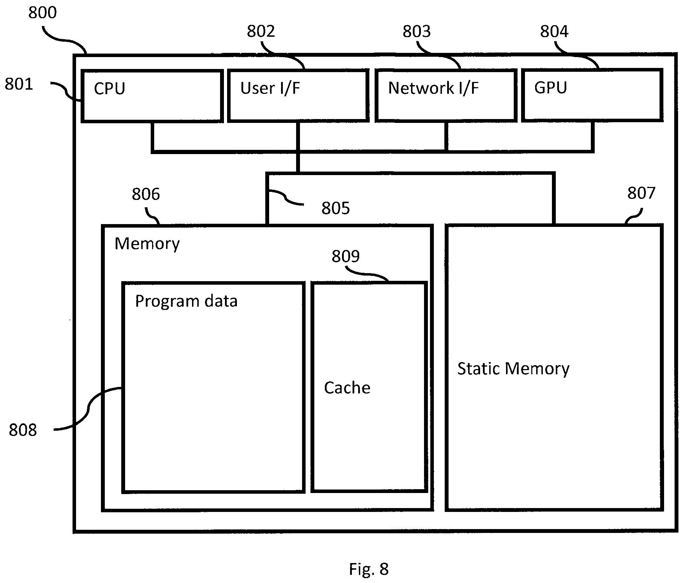

Fig. 8 is a diagrammatic representation of internal components of a computing system 800 implementing the functionality as described herein. The computing system 800 includes at least one processor 801, a user interface 802, a network interface 803 and a main memory 806, that communicate with each other via a bus 805. Optionally, the computing system 800 may further include a static memory 807 and a disk-drive unit (not shown) that also communicate with each via the bus 805. A video display, an alpha-numeric input device and a cursor control device may be provided as examples of user interface 802. Furthermore, the computing system 800 may also comprise one or more graphics processing units (GPU) 804.

The GPUs 804 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. GPUs can perform multiple simultaneous computations, thereby enabling the distributing of training processes and speeding up machine learning operations. Th machine learning modules in the data filtering module, 103 in Fig. 1, may be trained on the GPU.

The main memory 806 may be a random-access memory (RAM) and/or any further volatile memory. The main memory 806 may store program code. The main memory 806, may also store the filtering module, 103 in Fig. 1 and the data processing module, 106 in Fig. 1. Other modules needed for further functionalities described herein may be stored in the memory 806, too. The memory 806 may also store additional program data 808 required for providing the functionalities described herein.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and nonvolatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

**Claims**

1. A computerized method of filtering a dataset for processing, wherein the dataset
comprises a plurality of data records, the method comprising:

   determining, by an estimation module, selection estimation values for the data records;
   determining, by a pass-through function, pass-through probabilities for the data records based on the selection estimation values;
   generating a subset of data records by discarding at least a portion of the dataset based on the pass-through probabilities;
   processing, by a selection module, the subset of data records, wherein the selection module selects one or more data records of the subset of data records;
   assigning weights and labels to the data records of the subset of data records, wherein the weights reflect a data distribution of the data records with respect to the subset of data records, and wherein the labels represent a selection of the data records by the selection module;
updating the estimation module and the pass-through function based on the subset of data records including the weights and labels.

2. The method of claim 1 wherein the weights are determined on the pass-through probabilities.

3. The method of any of the claims 1 to 2, wherein the pass-through function is a trainable function, wherein updating the pass-through function comprises retraining the pass-through function based on the subset of data records including the weights and labels.

4. The method of any of the claims 1 to 3, wherein the estimation module is a machine learning routine, wherein updating the estimation module comprises retraining the estimation module based on the subset of data records including the weights and labels.

5. The method of any of the preceding claims, wherein the estimation module and the pass-through function are periodically updated.

6. The method of any of the preceding claims, wherein the data records are preprocessed before determining the selection estimation values, wherein preprocessing comprises at least one of merging a data record with additional information from a database, reducing the amount of data in a data record, and adding further information determined based on the data record to the data record.

7. The method of any of the preceding claims, wherein the data records comprise fields and values.

8. The method of any of the preceding claims, wherein the estimation module is a trained predictive model.

9. The method of any of the preceding claims, wherein the estimation module is a gradient boosted decision tree or a logistic regression model.

10. The method of any of the preceding claims, wherein the pass-through function is a monotonically increasing function.

11. The method of any of the preceding claims, wherein the pass-through probabilities are non-zero probabilities above a threshold.

12. The method of any of the preceding claims, wherein the pass-through function comprises two or more trainable parameters.

13. The method of claim 12, wherein two trainable parameters of the two or more trainable parameters are the slope of the transition from low to high pass-through probabilities and the location of the transition.

14. A system of filtering a dataset configured to execute the method according to any one of the preceding claims.

15. A computer program comprising instructions which, when the program is executed by a computer, cause the computer to carry out the method of any one of claims 1 to 13.

100

102
Data Processing System

101
Input
dataset

103
Data Filtering

106
Data Processing

104
Estimation
Module

107
Selection
Module

105
Pass-Through
Function

108
Output

Fig. 1

201 → Determine selection estimation values

202 → Determine pass-through probabilites

203 → Generate a data subset

204 → Processing by a selection module

205 → Assign weights and labels to the subset of data records

206 → Update estimation module and pass-through function

Fig. 3

Fig. 4

Fig. 5

Fig. 6

**701** Provide training datasets

**702** Train machine learning routines

Initial training

**703** Recieve new dataset

**704** Apply filtering

**705** Process Dataset

Operation

**706** Periodically determine new training data

Re-training

Fig. 7

Fig. 8

Europäisches
Patentamt

European
Patent Office

Office européen
des brevets

# EUROPEAN SEARCH REPORT

**Application Number**

EP 23 31 5018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/405619 A1 (RAMAMURTHY UTTAM B [IN] ET AL) 22 December 2022 (2022-12-22) * paragraph [0023] - paragraph [0119] * ----- | 1-15 | INV. G06N20/00 G06F16/215 |
| A | US 2017/270413 A1 (MOREIRA-MATIAS LUIS [DE] ET AL) 21 September 2017 (2017-09-21) * paragraph [0028] - paragraph [0079] * ----- | 1-15 | |
| A | US 2016/078367 A1 (ADJAOUTE AKLI [US]) 17 March 2016 (2016-03-17) * paragraph [0053] - paragraph [0124] * ----- | 1-15 | |
| A | WO 2022/198113 A1 (AVYAY SOLUTIONS INC [US]) 22 September 2022 (2022-09-22) * paragraph [0052] - paragraph [0057] * ----- | 1-15 | |
| A | US 2022/300856 A1 (ARCHULETA MICHELLE [US] ET AL) 22 September 2022 (2022-09-22) * paragraph [0045] - paragraph [0065] * ----- | 1-15 | |

TECHNICAL FIELDS
SEARCHED (IPC)

G06N
G06F

The present search report has been drawn up for all claims

| Place of search | Date of completion of the search | Examiner |
|---|---|---|
| Munich | 26 June 2023 | Yotova, Polina |

EPO FORM 1503 03.82 (P04C01)

## ANNEX TO THE EUROPEAN SEARCH REPORT
## ON EUROPEAN PATENT APPLICATION NO.

EP 23 31 5018

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2023

| Patent document cited in search report | | | Publication date | Patent family member(s) | | | Publication date |
|---|---|---|---|---|---|---|---|
| US 2022405619 | A1 | | 22-12-2022 | NONE | | | |
| US 2017270413 | A1 | | 21-09-2017 | NONE | | | |
| US 2016078367 | A1 | | 17-03-2016 | US | 2016078367 | A1 | 17-03-2016 |
| | | | | US | 2019258958 | A1 | 22-08-2019 |
| | | | | US | 2021049510 | A1 | 18-02-2021 |
| WO 2022198113 | A1 | | 22-09-2022 | NONE | | | |
| US 2022300856 | A1 | | 22-09-2022 | US | 2022300856 | A1 | 22-09-2022 |
| | | | | WO | 2022198105 | A1 | 22-09-2022 |

EPO FORM P0459

For more details about this annex : see Official Journal of the European Patent Office, No. 12/82